# EUROPEAN PATENT SPECIFICATION

(11) **EP 2 175 614 B1**
(45) Date of publication and mention of the grant of the patent: **10.04.2013**
(21) Application number: 09169184.0
(22) Date of filing: 01.09.2009
(51) Int. Cl.: H04L 29/08

(54) **System and methods for configuring an updating frequency for mobile wireless communications device application updates and related methods**
System und Verfahren zur Konfiguration einer Aktualisierungsfrequenz für Anwendungsaktualisierungen mobiler drahtloser Kommunikationsvorrichtungen und zugehörige Verfahren
Système et procédés pour configurer une fréquence d'actualisation pour les actualisations des applications d'un dispositif de communications sans fil et procédés correspondants

(30) Priority: 08.10.2008 US 103778 P
(43) Date of publication of application: 14.04.2010
(73) Proprietor: Research In Motion Limited, Waterloo, ON N2L 3W8 (CA)
(72) Inventor: Stoev, Orlin Vesselinov, Mississauga Ontario L4W 0B4 (CA); Chen, Xianfeng, Mississauga Ontario L4W 0B4 (CA); Brown, Michael W., Mississagua Ontario L4W 0B4 (CA)
(74) Representative: Roberts, Gwilym Vaughan

(56) References cited:
- EP-A1- 1 739 926
- WO-A1-2007/068268
- US-A1- 2006 190 569

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. By way of example, cellular telephones allow users to place and receive voice calls most anywhere they travel. Moreover, as cellular telephone technology has increased, so too has the functionality of cellular devices and the number of different devices available to users. For example, many cellular devices now incorporate personal digital assistant (PDA) features such as calendars, address books, task lists, etc. Moreover, such multi-function or "smart" devices may also allow users to wirelessly send and receive electronic mail (email) messages and access the Internet via a cellular network and/or a wireless local area network (WLAN), for example.

Mobile devices, such as smart phones, are also capable of running relatively sophisticated applications, such as games, document processing applications, chat or instant messaging applications, etc. As a result, it may be desirable to provide enhanced approaches for accessing and managing applications for mobile devices, especially as new applications continue to be developed and become available.

Document WO 2007/068268 deals with providing applications to subscribers owning a mobile telephonic terminal.

### Brief Description of the Drawings

For a better understanding of the various embodiments described herein and to show more clearly how they may be carried into effect, reference will now be made, by way of example only, to the accompanying drawings which show at least one example embodiment and in which:

FIG. 1 is a schematic block diagram of a mobile wireless communication system in accordance with one exemplary embodiment;

FIGS. 2 and 3 are flow diagrams illustrating related method steps to the system of FIG. 1;

FIG. 4 is a block diagram of an exemplary embodiment of a mobile device that may be used with the system of FIG. 1;

FIG. 5 is a block diagram of an exemplary embodiment of a communication subsystem component of the mobile device of FIG. 4;

FIG. 6 is an exemplary block diagram of a node of a wireless network; and

FIG. 7 is a block diagram illustrating components of a host system in one exemplary configuration for use with the wireless network of FIG. 6 and the mobile device of FIG. 4.

### Detailed Description

The present description is made with reference to the accompanying drawings, in which exemplary embodiments are shown. However, many different exemplary embodiments may be used, and thus the description should not be construed as limited to the exemplary embodiments set forth herein. Rather, these exemplary embodiments are provided so that this disclosure will be thorough and complete. Like numbers refer to like elements throughout.

In addition, numerous specific details are set forth in order to provide a thorough understanding of the example embodiments described herein. However, it will be understood by those of ordinary skill in the art that the exemplary embodiments described herein may be practiced without these specific details. In other instances, well-known methods, procedures and components have not been described in detail so as not to obscure the exemplary embodiments described herein. Also, the description is not to be considered as limiting the scope of the example embodiments described herein.

Mobile wireless communications device application management systems and methods are described herein for providing enhanced functionality with respect to software applications for the devices. The exemplary embodiments described herein may be used with mobile wireless communication devices, hereafter referred to as mobile devices, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

Generally speaking, a mobile wireless communications system is provided herein which may include at least one mobile wireless communications device configured to wirelessly communicate via a carrier network, and at least one application storage server configured to store a plurality of mobile device applications for use by the at least one mobile wireless communications device. The system may further include an application catalog server configured to update a list of available mobile device applications to be presented on the at least one mobile wireless communications device, and provide an interface for the carrier network to selectively change an updating frequency for updating the list of available mobile device applications.

The at least one mobile wireless communications device may poll the application catalog server for the list of available mobile device applications. More particularly, the at least one mobile wireless communications device may poll the application catalog server based upon the selected updating frequency. In addition, the list of the approved mobile device applications may comprise a Really Simple Syndication (RSS) formatted list including a plurality of application descriptors. Furthermore, the application descriptors may comprise at least one of an application name, version, vendor, description, and size.

A related application catalog server may be for use with at least one mobile wireless communications device configured to wirelessly communicate via a carrier network, and at least one application storage server configured to store a plurality of mobile device applications for use by the at least one mobile wireless communications device. The application catalog server may include a processing module configured to update a list of available mobile device applications to be presented on the at least one mobile wireless communications device, and an interface module configured to provide an interface for the carrier network to selectively change an updating frequency for updating the list of available mobile device applications.

A related mobile wireless communications method may include providing at least one mobile wireless communications device configured to wirelessly communicate via a carrier network, and storing a plurality of mobile device applications for use by the at least one mobile wireless communications device on at least one application storage server. The method may further include, at an application catalog server, updating a list of available mobile device applications to be presented on the at least one mobile wireless communications device, and providing an interface for the carrier network to selectively change an updating frequency for updating the list of available mobile device applications.

A physical computer-readable medium for use with at least one mobile wireless communications device configured to wirelessly communicate via a carrier network, and at least one application storage server configured to store a plurality of mobile device applications for use by the at least one mobile wireless communications device, is also provided. The physical computer-readable medium may include a processing module configured to update a list of available mobile device applications to be presented on the at least one mobile wireless communications device, and an interface module configured to provide an interface for the carrier network to selectively change an updating frequency for updating the list of available mobile device applications.

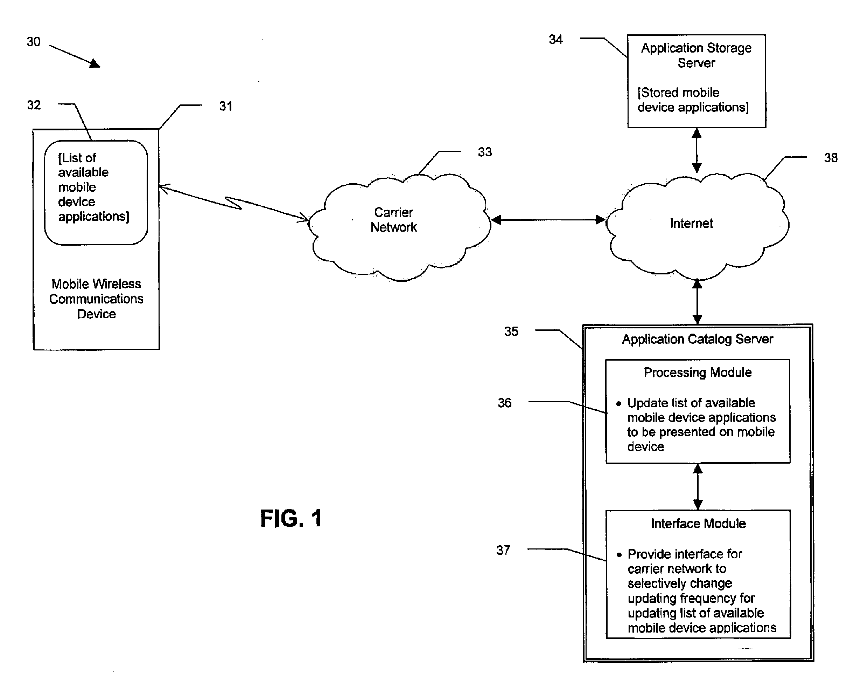

Turning now to FIGS. 1 through 3, a mobile wireless communications system **30** and associated method aspects are first described. The system **30** illustratively includes one or more mobile wireless communications devices **31** including a display **32** and configured to wirelessly communicate via a carrier network **33,** at Blocks **40** and **42.** One or more application storage servers **34** may be configured to store a plurality of mobile device applications for download via the Internet **38** and use by the mobile wireless communications device(s) **31,** at Block **44.** In some instances, different applications from different developers may be stored on a centralized application storage server **34** (e.g., a carrier network server or other third party provider), and in other instances individual application storage servers may be used for applications from respective developers, or respective application storage servers may be used for individual applications. Combinations of these approaches may be used within the same system as well.

Generally speaking, such mobile device applications may be grouped in the following exemplary categories: entertainment; games; map/navigation; music and video; news and weather; personal finance and banking, personal health and wellness, productivity and utilities; professional and business; reference and eBooks; social networking and sharing; sports and recreation; and travel. Of course, other categories or types of mobile device applications may also be used, as will be appreciated by those skilled in the art.

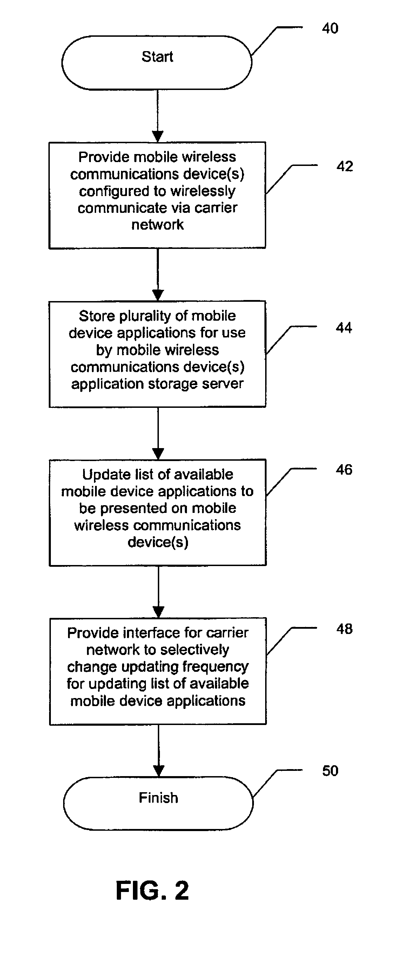

The system **30** further illustratively includes an application catalog server **35** including a processing module configured to update a list of available mobile device applications to be presented on the mobile wireless communications device(s) **31** (i.e., on the display **32** thereof), at Block **46.** By way of example, the list of the available mobile device applications may comprise a Really Simple Syndication (RSS) formatted list including a plurality of application descriptors (Block **46'**), though other suitable formats may also be used, as will be appreciated by those skilled in the art. The application descriptors may include, for example, one or more of an application name, version, vendor, description, and size. The application catalog server **35** further illustratively includes an interface module **37** configured to provide an interface for the carrier network **33** to selectively change an updating frequency for updating the list of available mobile device applications, at Block **48,** thus concluding the method illustrated in FIG. 2 (Block **50**).

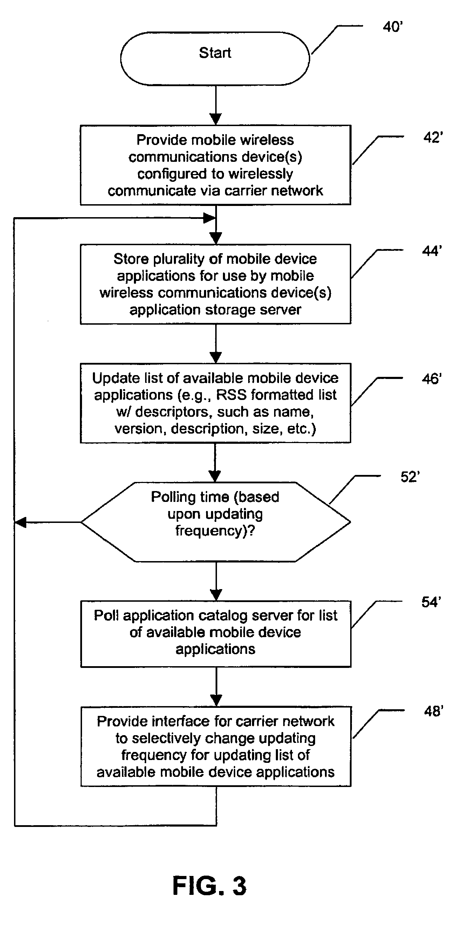

The system **30** may advantageously support push or pull (or both) updating of the list of available mobile device applications. In accordance with one example, the mobile wireless communications device **31** may poll the application catalog server **35** for the list of available mobile device applications. More particularly, this may be done responsive to a user request for available applications, and it may also be done by the mobile device **31** on a schedule, i.e., at the selected updating frequency. That is, the application catalog server **35** may notify the mobile device **31** of the selected updating frequency, and the mobile device may therefore poll the application catalog server based upon the selected updating frequency, at Blocks **52'** and **54'** (FIG. 3). In this way, communications bandwidth, mobile device processing or memory resources, and data communications charges may advantageously be conserved by avoiding requests for updates to the list at a rate that exceeds the frequency at which the list is being updated, as will be appreciated by those skilled in the art.

The application catalog server **35** further advantageously includes an interface module **37** configured to provide an interface for the carrier network **33** to selectively change an updating frequency for updating the list of available mobile device applications, as will be discussed further below.

An exemplary application system is now described which is referred to below as an "Application Center" or "App Center." The following exemplary embodiments are provided with reference to BlackBerry^{®} mobile devices and systems from Research in Motion Limited ("RIM") of Waterloo, Ontario, Canada.

One potential problem with mobile device application provisioning is that of loading applications to a mobile device that were not available at the factory build time of the device, but are desired by carriers to be installed on the user's device on initial start and activation of the device. In some cases such applications may still be in the development stage by third party vendors at the time the mobile device is approved for factory build and shipping to carriers. The development and release of such applications may be complete before the actual device launch to the general market. Carriers may want the ability to add applications to already manufactured devices on initial boot, for example, and to be able to dynamically control the list of the auto load applications.

As such, an auto load feature may advantageously be provided that is triggered when a mobile device registers with the carrier network and the BlackBerry^{®} infrastructure and receives the transport and Application Center service books. The service books are used to determine the transport and carrier directory to load. Once loaded, the directory contains a list of applications, some of which may be marked as auto load mandatory, required, etc., applications. When the Application Center determines that an application from the list is marked as auto load, it will download the applications and install them on the device, silently, in the background, without requiring any user interaction. A flag in the permanent memory of the device may be marked to indicate that the initial boot auto load of applications has completed and it will not be triggered again for this device, even if device data is wiped. The applications will be available for the user to interact with, and the carrier will advantageously achieve its goal of making certain applications available on the device past the date of factory load of the device, but at initial boot of the device.

By way of contrast, the Microsoft Windows^{®} autoloader on initial boot is different because the installer is loaded on a PC at manufacturing time. The Windows setup does not address the problem experienced by carriers, for example, of loading applications not available at device manufacture time. In accordance with the present example, the applications may advantageously be auto loaded at initial device boot, by downloading the applications over the air and installing them on the device on top of the factory loaded software.

It may also be desirable to allow carriers to have a central place on a mobile device to market and make available applications of their choosing, and to be able to dynamically change this content at any time. This may be seen as a more robust replacement for carrier VPLs. RIM hosts a server in a network operating center (NOC) which contains lists of applications per carrier/device type/OS version. These lists are stored as XML files, for example.

Carriers make requests to add applications to the lists by providing details to RIM about the application including name, vendor, version, text description, icon, marketing image, and links to the application binaries (which may not necessarily be hosted by RIM). The application details are entered into an editor utility which generates the XML files to be hosted. The lists are published to the RIM hosted server in the NOC using a server publishing utility. These steps are done by RIM. Service books are pushed to devices, which specify the base URL location of the RIM hosted server. Part of the base URL includes the name of the carrier.

The device appends its device type and OS version to the base URL when it downloads the XML files from the server so that it gets the appropriate list. The device presents the list of applications to the user in a central UI application, from which the user is able to invoke installing selected applications. The device may check for updates to the list automatically at a given interval if enabled, or manually as requested by the user, allowing additions or changes to the list to be propagated from the server to the device.

By way of contrast, other typical mobile device application approaches do not allow for control by carriers, rather they either make available single vendor applications (e.g., Google^{™} Mobile Updater), or arbitrary third party applications submitted by developers themselves (e.g., Handango InHand, iPhone App Store, etc.).

Another potential problem with mobile device application provision is synchronization of a list of items between the server and client, without having to transmit the full list every time the client wants to check for updates. The App Center may advantageously check for application list updates by doing an http HEAD request of the app list URL, so that only the headers are returned, and may further compare the etag in the response headers with a cached etag from the previously returned list. If the etags match, no further actions are taken as the existing list of applications on the device are up to date. If the etags do not match, the new application list is downloaded from the app center server, and the etag for the updated list is cached for the next request. Generation of the etag itself may be performed using built in functionality of an apache web server, for example, and may be based on the last modified date of the content, although other suitable approaches may also be used. By way of contrast, "instant messenger" type approaches may be used for keeping up-to-date a list of contacts/buddies, whereas the App Center is keeping up to date a list of applications provided by a third party carrier.

Another challenge is to provide dynamic control over the frequency of updates of an available application list that is controlled and configurable from a central location and that will affect all client applications. Different carriers may have different marketing strategies for advertising applications to users that change over time. Carriers may therefore need a mechanism to allow them to dynamically control the frequency of updates of new application lists as their marketing strategies dictate.

In accordance with one advantageous aspect, the application list in the Application Center is controlled by a specific carrier. The carrier may use a different frequency of updating the list of marketed applications at different points in time. This may advantageously prevent the device of polling for updates often, as this may waste battery and consume unnecessary device and system resources. The carrier may start the setup with less frequent updates in the beginning, such as once every 30 days for example, and decide to change that at a later time to one update every 15 days and down to once every 7 days further down the road, for example. Other schedules may also be used. The configuration of the time interval for application updates will allow carriers to change their strategy dynamically over time to meet their immediate needs.

The existing use of time intervals for updating applications in other contexts is generally used for a single application to update itself, or in the case of anti-virus applications to update the virus definitions that the application uses. The frequency of the update is controlled usually by the user, or hard coded in the application itself with no means for central management point or the flexibility to dynamically change the interval on the fly. By way of further contrast, the exemplary embodiment also differs from such approaches in that the time interval itself is not targeting an update to the application itself, but rather the list of marketed applications by the carrier.

In accordance with one exemplary implementation, an Application Directory contains a set of static Application Listings. Application Listings may be accessed by the Application Center on a BlackBerry^{®} device based upon information such as carrier, device model, OS version, etc. Application Listings may be grouped for carriers. The Application Listings may be prepared and published by the Application Directory Administrator based on approved requests from carriers, for example.

An Application Directory Editing Tool may enable an administrator to add new listings for a carrier to the application listing database. By way of example, an application listing may be described by the fields "Base URI", "Device", "Operating System", and "Update Interval." The Application Directory Editing Tool enables an administrator to modify existing application listings in the application listing database. Listing fields that may be modified include fields "Base URI", "Device", "Operating System", and "Update Interval," for example.

The Application Directory Editing Tool may also enable an administrator to remove carrier listings from the application listing database. The field "Base URI" may be optional. The base URI field may be used to create multiple application listings for the same device, and OS within a carrier. The editing tool may prevent a single carrier from having duplicate base URIs. If a carrier base URI already exists, an error message may be displayed. The field may support alpha-numeric characters as well as a dash and underscore. An exemplary maximum length of the field is 32 characters, although other lengths may also be used.

The "Base URI" field, when configured, may be used by a device if a service book resides on the device containing the same base URI field. The field "Device" may be made mandatory. The field may be a select box that lists all devices configured in the "Manage Entities" section. Failing to select a device may result in an appropriate error message being displayed to the administrator. The field "Operating System" may also be mandatory. The field may be a select box that lists all operating systems configured in the "Manage Entities" section. Failing to select an operating system may result in an appropriate error message being displayed to the administrator.

The field "Update Interval" may also be mandatory. The default or standard value of the field may be 7, although other values may also be used. The update interval may be measured in days, and the field value may be a valid integer greater or equal to 1. Failing to provide an update interval, or specifying an invalid interval may result in an appropriate error message being displayed to the administrator.

The Editing Tool GUI advantageously provides an administrator with table "Listings". The list is a table with the headings 'Base URI', 'Device', 'OS', 'Edit', 'Manage', 'Copy' and 'Delete'. The fields 'Base URI', 'Device', and 'OS' may be sorted alphabetically, and the sort may be case sensitive (although it need not be in all embodiments). Selecting 'Edit' from a "Listings" record, may populate the listing fields "Base URI", "Device", "Operating System", and "Update Interval" (i.e., the updating frequency for updating the list of available mobile device applications) with the respective data from the record. This feature permits administrators to update records.

Selecting 'Manage Applications' from a "Listings" record may permit administrators to manage (add, modify, delete) applications associated with the record. A list of applications associated with the listing record may be displayed. Moreover, selecting 'Copy' from a "Listings" record may populate the listing fields "Base URI", "Device", "Operating System", and "Update Interval" with the respective data from the record. This feature advantageously permits administrators to copy records to use as a template when creating new entries in the listings table. Selecting 'Delete' from a "Listings" record may remove the listing record from the database.

In accordance with another exemplary approach, the Application Center on a mobile device may periodically query (or poll) an Application Directory on an application server for changes and updates, such as new applications available for installation, or newer versions of applications available for upgrade. However, this approach may consume a significant amount or resources, such bandwidth, battery, and CPU power on mobile devices, as well as server time. This may be especially true when a large volume of devices poll for an application directory that is not changed often.

One potential approach is to provide a push-based application directory update notification. More particularly, the Application Center on the mobile devices may subscribe to the Application Directory with a list of interested application categories. The Application Directory may then push lists of applications to devices that meet their respective applications of interest. The Application Center may also report to the Application Directory information regarding the applications installed on a given device. Based on the subscription (i.e., device interests) and lifecycle status (i.e., applications installed on the device), the Application Directory may push notification messages to the Application Center on the devices based upon Application Directory updates, such as new applications being published, updated versions of applications being published, etc.

Stated alternatively, rather than the client device frequently polling the application server for changes or updates, which may consume a significant amount of resources, the application update service may advantageously be subscription/notification based. The application server may advantageously push new/updated application notifications to client devices only when there are changes at the application server, which may advantageously conserve device, network, or server resources, or all three, for example.

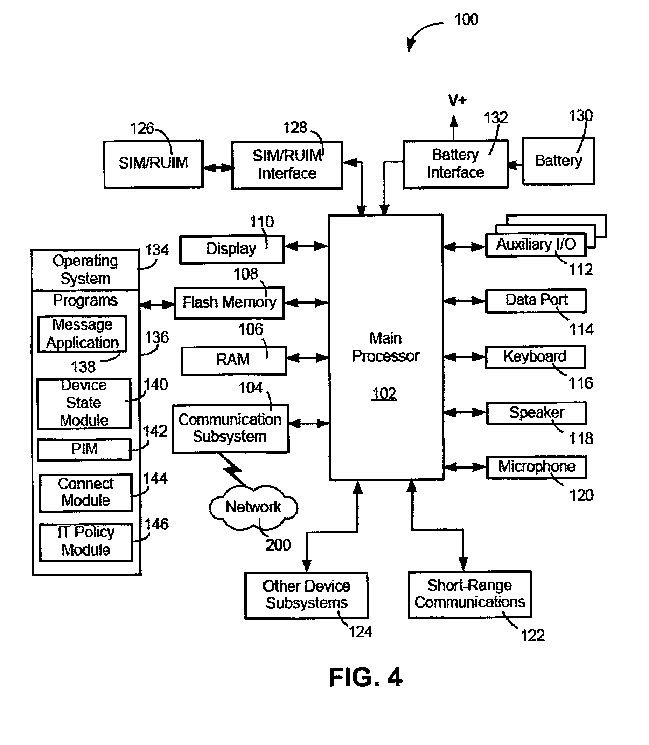

To aid the reader in understanding the structure of the mobile device and how it communicates with other devices and host systems, reference will now be made to FIGS. 4 through 7. Referring first to FIG. 4, shown therein is a block diagram of an example embodiment of a mobile device **100**. The mobile device **100** includes a number of components such as a main processor **102** that controls the overall operation of the mobile device **100**. Communication functions, including data and voice communications, are performed through a communication subsystem **104**. The communication subsystem **104** receives messages from and sends messages to a wireless network **200**. In this example embodiment of the mobile device **100**, the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTACT^{™} network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110,** an auxiliary input/output (I/O) subsystem **112,** a data port **114,** a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200,** and device-resident functions such as a calculator or task list.

The mobile device **100** can send and receive communication signals over the wireless network **200** after required network registration or activation procedures have been completed. Network access is associated with a subscriber or user of the mobile device **100.** To identify a subscriber, the mobile device **100** requires a SIM/RUIM card **126** (i.e. Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100,** among other things. Without the SIM card **126,** the mobile device **100** is not fully operational for communication with the wireless network **200.** By inserting the SIM card/RUIM **126** into the SIM/RUIM interface **128,** a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including datebook (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some example embodiments, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system **134** and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100**. In at least some example embodiments, some of the sent and received messages may be stored remotely from the device **100** such as in a data store of an associated host system that the mobile device **100** communicates with.

The software applications can further include a device state module **140,** a Personal Information Manager (PIM) **142,** and other suitable modules (not shown). The device state module **140** provides persistence, i.e. the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, e-mail, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

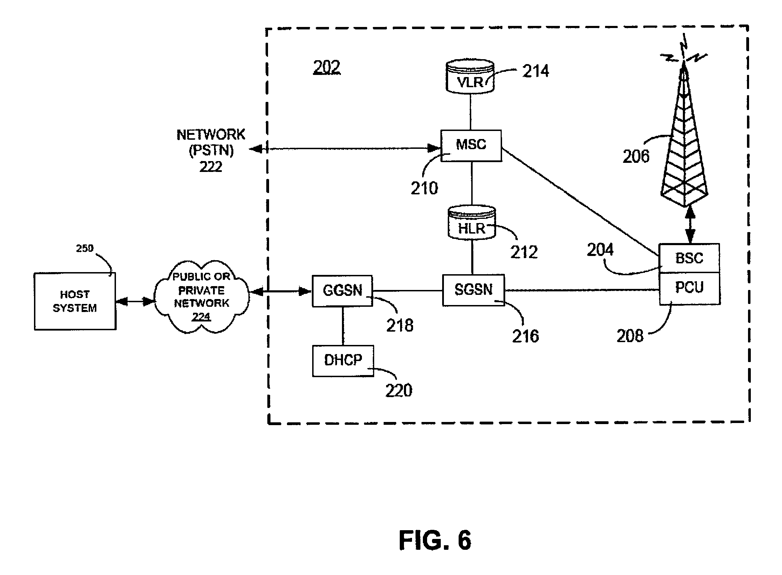

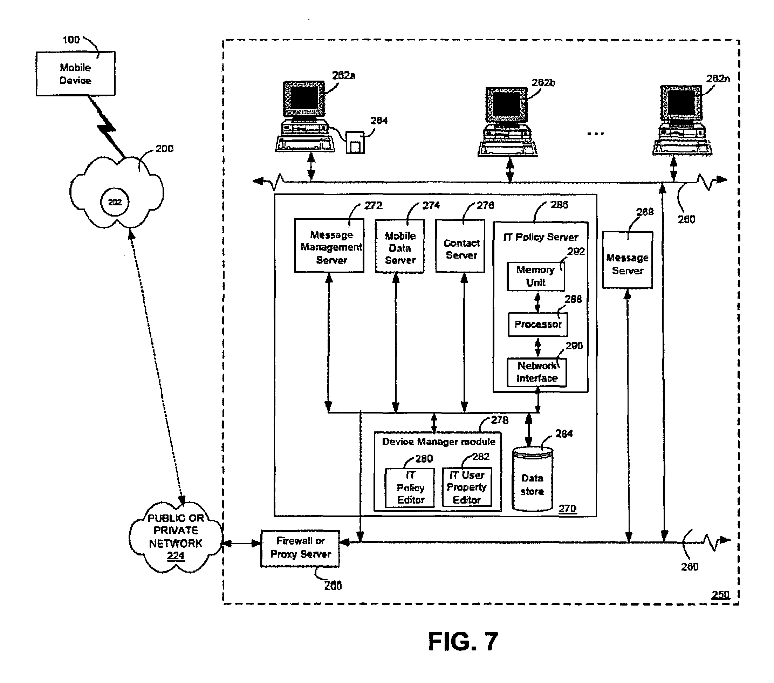

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 6 and 7, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100.** This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100**. Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100**. These software applications can be third party applications, which are added after the manufacture of the mobile device **100**. Examples of third party applications include games, calculators, utilities, etc.

The additional applications can be loaded onto the mobile device **100** through at least one of the wireless network **200,** the auxiliary I/O subsystem **112,** the data port **114**, the short-range communications subsystem **122,** or any other suitable device subsystem **124.** This flexibility in application installation increases the functionality of the mobile device **100** and may provide enhanced on-device functions, communication-related functions, or both. For example, secure communication applications may enable electronic commerce functions and other such financial transactions to be performed using the mobile device **100.**

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **200.** For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as e-mail messages, for example, using the keyboard **116** in conjunction with the display **110** and possibly the auxiliary I/O subsystem **112**. The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104**.

For voice communications, the overall operation of the mobile device **100** is substantially similar, except that the received signals are output to the speaker **118,** and signals for transmission are generated by the microphone **120**. Alternative voice or audio I/O subsystems, such as a voice message recording subsystem, can also be implemented on the mobile device **100**. Although voice or audio signal output is accomplished primarily through the speaker **118,** the display **110** can also be used to provide additional information such as the identity of a calling party, duration of a voice call, or other voice call related information.

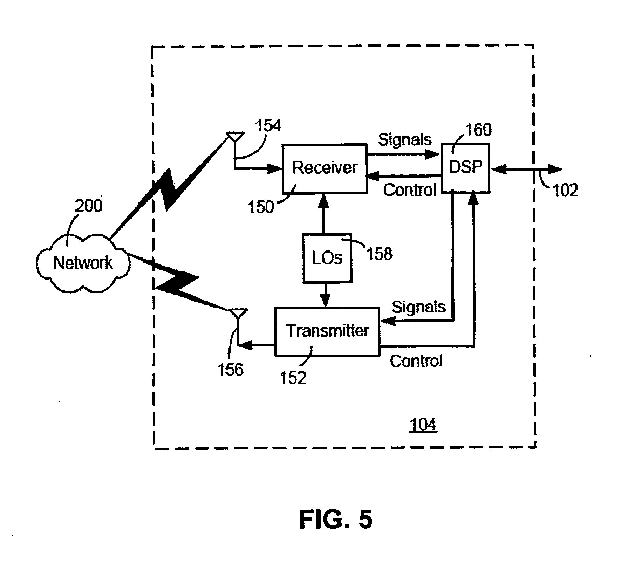

Referring now to FIG. 5, an example block diagram of the communication subsystem component **104** is shown. The communication subsystem **104** includes a receiver **150,** a transmitter **152,** as well as associated components such as one or more embedded or internal antenna elements **154** and 156, Local Oscillators (LOs) **158,** and a processing module such as a Digital Signal Processor (DSP) **160.** The particular design of the communication subsystem **104** is dependent upon the communication network **200** with which the mobile device **100** is intended to operate. Thus, it should be understood that the design illustrated in FIG. 5 serves only as one example.

Signals received by the antenna **154** through the wireless network **200** are input to the receiver **150**, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160**. In a similar manner, signals to be transmitted are processed, including modulation and encoding, by the DSP **160**. These DSP-processed signals are input to the transmitter **152** for digital-to-analog (D/A) conversion, frequency up conversion, filtering, amplification and transmission over the wireless network **200** via the antenna **156**. The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160**.

The wireless link between the mobile device **100** and the wireless network **200** can contain one or more different channels, typically different RF channels, and associated protocols used between the mobile device **100** and the wireless network **200**. An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network **200** and is otherwise turned off to conserve resources. Similarly, the receiver **150** is periodically turned off to conserve power until it is needed to receive signals or information (if at all) during designated time periods.

Referring now to FIG. 6, a block diagram of an example implementation of a node **202** of the wireless network **200** is shown. In practice, the wireless network **200** comprises one or more nodes **202.** In conjunction with the connect module **144,** the mobile device **100** can communicate with the node **202** within the wireless network **200.** In the example implementation of FIG. 6, the node **202** is configured in accordance with General Packet Radio Service (GPRS) and Global Systems for Mobile (GSM) technologies. The node **202** includes a base station controller (BSC) **204** with an associated tower station **206,** a Packet Control Unit (PCU) **208** added for GPRS support in GSM, a Mobile Switching Center (MSC) **210,** a Home Location Register (HLR) **212,** a Visitor Location Registry (VLR) **214,** a Serving GPRS Support Node (SGSN) **216,** a Gateway GPRS Support Node (GGSN) **218,** and a Dynamic Host Configuration Protocol (DHCP) **220.** This list of components is not meant to be an exhaustive list of the components of every node **202** within a GSM/GPRS network, but rather a list of components that are commonly used in communications through the network **200.**

In a GSM network, the MSC **210** is coupled to the BSC **204** and to a landline network, such as a Public Switched Telephone Network (PSTN) **222** to satisfy circuit switched requirements. The connection through the PCU **208**, the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216**. Access to the VLR **214** is controlled by the MSC **210**.

The station **206** is a fixed transceiver station and together with the BSC **204** form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station **206**. The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212.** The HLR **212** also contains location information for each registered mobile device and can be queried to determine the current location of a mobile device. The MSC **210** is responsible for a group of location areas and stores the data of the mobile devices currently in its area of responsibility in the VLR **214.** Further, the VLR **214** also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214,** the amount of traffic between these nodes can be reduced so that voice and data services can be provided with faster response times and at the same time requiring less use of computing resources.

The SGSN **216** and the GGSN **218** are elements added for GPRS support; namely packet switched data support, within GSM. The SGSN **216** and the MSC **210** have similar responsibilities within the wireless network **200** by keeping track of the location of each mobile device **100.** The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200**. During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218**. There are many mechanisms for dynamic IP assignment, including using a combination of a Remote Authentication Dial-In User Service (RADIUS) server and a DHCP server. Once the GPRS Attach is complete, a logical connection is established from a mobile device **100,** through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network **200,** insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200.** To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220.**

Referring now to FIG. 7, shown therein is a block diagram illustrating components of an example configuration of a host system **250** that the mobile device **100** can communicate with in conjunction with the connect module **144.** The host system **250** will typically be a corporate enterprise or other local area network (LAN), but may also be a home office computer or some other private system, for example, in variant implementations. In this example shown in FIG. 7, the host system **250** is depicted as a LAN of an organization to which a user of the mobile device **100** belongs. Typically, a plurality of mobile devices can communicate wirelessly with the host system **250** through one or more nodes **202** of the wireless network **200**.

The host system **250** comprises a number of network components connected to each other by a network **260**. For instance, a user's desktop computer **262a** with an accompanying cradle **264** for the user's mobile device **100** is situated on a LAN connection. The cradle **264** for the mobile device **100** can be coupled to the computer **262a** by a serial or a Universal Serial Bus (USB) connection, for example. Other user computers **262b-262n** are also situated on the network **260**, and each may or may not be equipped with an accompanying cradle **264**. The cradle **264** facilitates the loading of information (e.g. PIM data, private symmetric encryption keys to facilitate secure communications) from the user computer **262a** to the mobile device **100**, and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 7. Furthermore, only a subset of network components of the host system **250** are shown in FIG. 7 for ease of exposition, and it will be understood by persons skilled in the art that the host system **250** will comprise additional components that are not explicitly shown in FIG. 7 for this example configuration. More generally, the host system **250** may represent a smaller part of a larger network (not shown) of the organization, and may comprise different components and/or be arranged in different topologies than that shown in the example embodiment of FIG. 7.

To facilitate the operation of the mobile device 100 and the wireless communication of messages and message-related data between the mobile device **100** and components of the host system **250**, a number of wireless communication support components **270** can be provided. In some implementations, the wireless communication support components **270** can include a message management server **272,** a mobile data server **274,** a contact server **276**, and a device manager module **278.** The device manager module **278** includes an IT Policy editor **280** and an IT user property editor **282,** as well as other software components for allowing an IT administrator to configure the mobile devices **100.** In an alternative example embodiment, there may be one editor that provides the functionality of both the IT policy editor **280** and the IT user property editor **282.** The support components **270** also include a data store **284,** and an IT policy server **286.** The IT policy server **286** includes a processor **288,** a network interface **290** and a memory unit **292.** The processor **288** controls the operation of the IT policy server **286** and executes functions related to the standardized IT policy as described below. The network interface **290** allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device **100.** The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device **100** in this alternative implementation.

Messages intended for a user of the mobile device 100 are initially received by a message server **268** of the host system **250**. Such messages may originate from any number of sources. For instance, a message may have been sent by a sender from the computer **262b** within the host system **250**, from a different mobile device (not shown) connected to the wireless network **200** or a different wireless network, or from a different computing device, or other device capable of sending messages, via the shared network infrastructure **224**, possibly through an application service provider (ASP) or Internet service provider (ISP), for example.

The message server **268** typically acts as the primary interface for the exchange of messages, particularly e-mail messages, within the organization and over the shared network infrastructure **224**. Each user in the organization that has been set up to send and receive messages is typically associated with a user account managed by the message server **268**. Some example implementations of the message server **268** include a Microsoft Exchange^{™} server, a Lotus Domino^{™} server, a Novell Groupwise^{™} server, or another suitable mail server installed in a corporate environment. In some implementations, the host system **250** may comprise multiple message servers **268**. The message server **268** may also be adapted to provide additional functions beyond message management, including the management of data associated with calendars and task lists, for example.

When messages are received by the message server 268, they are typically stored in a data store associated with the message server **268**. In at least some example embodiments, the data store may be a separate hardware unit, such as data store **284**, that the message server **268** communicates with. Messages can be subsequently retrieved and delivered to users by accessing the message server **268**. For instance, an e-mail client application operating on a user's computer **262a** may request the e-mail messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i.e. those received in the past two to three months for example) can be stored on the mobile device **100.**

When operating the mobile device **100,** the user may wish to have e-mail messages retrieved for delivery to the mobile device **100.** The message application **138** operating on the mobile device **100** may also request messages associated with the user's account from the message server **268**. The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device **100** is assigned its own e-mail address, and messages addressed specifically to the mobile device **100** are automatically redirected to the mobile device **100** as they are received by the message server **268**.

The message management server **272** can be used to specifically provide support for the management of messages, such as e-mail messages, that are to be handled by mobile devices. Generally, while messages are still stored on the message server **268,** the message management server **272** can be used to control when, if, and how messages are sent to the mobile device **100.** The message management server **272** also facilitates the handling of messages composed on the mobile device **100,** which are sent to the message server **268** for subsequent delivery.

For example, the message management server **272** may monitor the user's "mailbox" (e.g. the message store associated with the user's account on the message server **268**) for new e-mail messages, and apply user-definable filters to new messages to determine if and how the messages are relayed to the user's mobile device **100**. The message management server **272** may also compress and encrypt new messages (e.g. using an encryption technique such as Data Encryption Standard (DES), Triple DES, or Advanced Encryption Standard (AES)) and push them to the mobile device **100** via the shared network infrastructure **224** and the wireless network **200**. The message management server **272** may also receive messages composed on the mobile device **100** (e.g. encrypted using Triple DES), decrypt and decompress the composed messages, re-format the composed messages if desired so that they will appear to have originated from the user's computer **262a,** and re-route the composed messages to the message server **268** for delivery.

Certain properties or restrictions associated with messages that are to be sent from and/or received by the mobile device **100** can be defined (e.g. by an administrator in accordance with IT policy) and enforced by the message management server **272.** These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g. "blocks") of a message stored on the message server **268** to the mobile device **100.** For example, in some cases, when a message is initially retrieved by the mobile device **100** from the message server **268,** the message management server **272** may push only the first part of a message to the mobile device **100,** with the part being of a pre-defined size (e.g. 2 KB). The user can then request that more of the message be delivered in similar-sized blocks by the message management server **272** to the mobile device **100**, possibly up to a maximum pre-defined message size. Accordingly, the message management server **272** facilitates better control over the type of data and the amount of data that is communicated to the mobile device **100**, and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server **276** can include the name, phone number, work address and e-mail address of the contact, among other information. The contact server **276** can also provide a global address list that contains the contact information for all of the contacts associated with the host system **250.**

It will be understood by persons skilled in the art that the message management server **272,** the mobile data server **274,** the contact server **276,** the device manager module **278,** the data store **284** and the IT policy server **286** do not need to be implemented on separate physical servers within the host system **250.** For example, some or all of the functions associated with the message management server **272** may be integrated with the message server **268,** or some other server in the host system **250.** Alternatively, the host system **250** may comprise multiple message management servers **272,** particularly in variant implementations where a large number of mobile devices need to be supported.

Alternatively, in some example embodiments, the IT policy server **286** can provide the IT policy editor **280**, the IT user property editor **282** and the data store **284**. In some cases, the IT policy server **286** can also provide the device manager module **278**. The processor **288** of the IT policy server **286** can be used to perform the various steps of a method for providing IT policy data that is customizable on a per-user basis. The processor **288** can execute the editors **280** and **282.** In some cases, the functionality of the editors **280** and **282** can be provided by a single editor. In some cases, the memory unit **292** can provide the data store **284.**

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices **100** such as auto signature text, WLAN/VoIP/VPN configuration, security requirements (e.g. encryption algorithms, password rules, etc.), specifying themes or applications that are allowed to run on the mobile device **100,** and the like.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications system comprising:
at least one mobile wireless communications device configured to wirelessly communicate via a carrier network;
at least one application storage server configured to store a plurality of mobile device applications for use by the at least one mobile wireless communications device; and
an application catalog server configured to
update a list of available mobile device applications to be presented on said at least one mobile wireless communications device, and
provide an interface for the carrier network to selectively change an updating frequency for updating the list of available mobile device applications.

2. The mobile wireless communications system of Claim 1 wherein said at least one mobile wireless communications device polls said application catalog server for the list of available mobile device applications.

3. The mobile wireless communications system of Claim 2 wherein said at least one mobile wireless communications device polls said application catalog server based upon the selected updating frequency.

4. The mobile wireless communications system of Claim 1 wherein the list of the available mobile device applications comprises a Really Simple Syndication (RSS) formatted list comprising a plurality of application descriptors.

5. The mobile wireless communications system of Claim 4 wherein the application descriptors comprise at least one of an application name, version, vendor, description, and size.

6. An application catalog server for use with at least one mobile wireless communications device configured to wirelessly communicate via a carrier network, at least one application storage server configured to store a plurality of mobile device applications for use by the at least one mobile wireless communications device, the application catalog server comprising:
a processing module configured to update a list of available mobile device applications to be presented on said at least one mobile wireless communications device; and
an interface module configured to provide an interface for the carrier network to selectively change an updating frequency for updating the list of available mobile device applications.

7. The application catalog server of Claim 6 wherein said processing module provides the list of available mobile device applications based upon polling from the at least one mobile wireless communications device.

8. The application catalog server of Claim 7 wherein the at least one mobile wireless communications device polls said processing module based upon the selected updating frequency.

9. The application catalog server of Claim 6 wherein the list of the available mobile device applications comprises a Really Simple Syndication (RSS) formatted list comprising a plurality of application descriptors.

10. The application catalog server of Claim 9 wherein the application descriptors comprise at least one of an application name, version, vendor, description, and size.

11. A mobile wireless communications method comprising:
providing at least one mobile wireless communications device configured to wirelessly communicate via a carrier network;
storing a plurality of mobile device applications for use by the at least one mobile wireless communications device on at least one application storage server; and
at an application catalog server,
updating a list of available mobile device applications to be presented on the at least one mobile wireless communications device, and
providing an interface for the carrier network to selectively change an updating frequency for updating the list of available mobile device applications.

12. The method of Claim 11 further comprising, at the at least one mobile wireless communications device, polling the application catalog server for the list of available mobile device applications.

13. The method of Claim 12 wherein polling comprises polling the application catalog server based upon the selected updating frequency.

14. The method of Claim 11 wherein the list of the available mobile device applications comprises a Really Simple Syndication (RSS) formatted list comprising a plurality of application descriptors.

15. The method of Claim 14 wherein the application descriptors comprise at least one of an application name, version, vendor, description, and size.

## Patentansprüche

1. Ein mobiles drahtloses Kommunikationssystem, das aufweist:
zumindest eine mobile drahtlose Kommunikationsvorrichtung, die konfiguriert ist, drahtlos über ein Carrier- bzw. Betreiber-Netzwerk zu kommunizieren;
zumindest einen Anwendungsspeicherserver, der konfiguriert ist, eine Vielzahl von Mobilvorrichtungsanwendungen zu speichern zur Verwendung durch die zumindest eine mobile drahtlose Kommunikationsvorrichtung;
und
einen Anwendungskatalogserver, der konfiguriert ist zum
Aktualisieren einer Liste von verfügbaren Mobilvorrichtungsanwendungen, die auf der zumindest einen mobilen drahtlosen Kommunikationsvorrichtung präsentiert wird, und
Vorsehen einer Schnittstelle für das Carrier-Netzwerk, um eine Aktualisierungshäufigkeit zur Aktualisierung der Liste von verfügbaren Mobilvorrichtungsanwendungen selektiv zu ändern.

2. Das mobile drahtlose Kommunikationssystem gemäß Anspruch 1, wobei die zumindest eine mobile drahtlose Kommunikationsvorrichtung den Anwendungskatalogserver hinsichtlich der Liste von verfügbaren Mobilvorrichtungsanwendungen abfragt.

3. Das mobile drahtlose Kommunikationssystem gemäß Anspruch 2, wobei die zumindest eine mobile drahtlose Kommunikationsvorrichtung den Anwendungskatalogserver basierend auf der gewählten Aktualisierungshäufigkeit abfragt.

4. Das mobile drahtlose Kommunikationssystem gemäß Anspruch 1, wobei die Liste der verfügbaren Mobilvorrichtungsanwendungen eine RSS(Really Simple Syndication)-formatierte Liste aufweist, die eine Vielzahl von Anwendungs-Deskriptoren aufweist.

5. Das mobile drahtlose Kommunikationssystem gemäß Anspruch 4, wobei die Anwendungs-Deskriptoren zumindest eines aus einem Namen, einer Version, einem Anbieter, einer Beschreibung und einer Größe einer Anwendung aufweisen.

6. Ein Anwendungskatalogserver zur Verwendung mit zumindest einer mobilen drahtlosen Kommunikationsvorrichtung, die konfiguriert ist, drahtlos über ein Carrier-Netzwerk zu kommunizieren, zumindest einem Anwendungsspeicherserver, der konfiguriert ist, eine Vielzahl von Mobilvorrichtungsanwendungen zu speichern zur Verwendung durch die zumindest eine mobile drahtlose Kommunikationsvorrichtung, wobei der Anwendungskatalogserver aufweist:
ein Verarbeitungsmodul, das konfiguriert ist zum Aktualisieren einer Liste von verfügbaren Mobilvorrichtungsanwendungen, die auf der zumindest einen mobilen drahtlosen Kommunikationsvorrichtung präsentiert wird; und
ein Schnittstellenmodul, das konfiguriert ist zum Vorsehen einer Schnittstelle für das Carrier-Netzwerk, um eine Aktualisierungshäufigkeit zur Aktualisierung der Liste von verfügbaren Mobilvorrichtungsanwendungen selektiv zu ändern.

7. Der Anwendungskatalogserver gemäß Anspruch 6, wobei das Verarbeitungsmodul die Liste von verfügbaren Mobilvorrichtungsanwendungen basierend auf einem Abfragen von der zumindest einen mobilen drahtlosen Kommunikationsvorrichtung vorsieht.

8. Der Anwendungskatalogserver gemäß Anspruch 7, wobei die zumindest eine mobile drahtlose Kommunikationsvorrichtung das Verarbeitungsmodul basierend auf der gewählten Aktualisierungshäufigkeit abfragt.

9. Der Anwendungskatalogserver gemäß Anspruch 6, wobei die Liste der verfügbaren Mobilvorrichtungsanwendungen eine RSS(Really Simple Syndication)-formatierte Liste aufweist, die eine Vielzahl von Anwendungs-Deskriptoren aufweist.

10. Der Anwendungskatalogserver gemäß Anspruch 9, wobei die Anwendungs-Deskriptoren zumindest eines aus einem Namen, einer Version, einem Anbieter, einer Beschreibung und einer Größe einer Anwendung aufweisen.

11. Ein mobiles drahtloses Kommunikationsverfahren, das aufweist:
Vorsehen zumindest einer mobilen drahtlosen Kommunikationsvorrichtung, die konfiguriert ist, drahtlos über ein Carrier-Netzwerk zu kommunizieren;
Speichern einer Vielzahl von Mobilvorrichtungsanwendungen zur Verwendung durch die zumindest eine mobile drahtlose Kommunikationsvorrichtung auf zumindest einem Anwendungsspeicherserver; und
an einem Anwendungskatalogserver,
Aktualisieren einer Liste von verfügbaren Mobilvorrichtungsanwendungen, die auf der zumindest einen mobilen drahtlosen Kommunikationsvorrichtung präsentiert wird, und
Vorsehen einer Schnittstelle für das Carrier-Netzwerk, um eine Aktualisierungshäufigkeit zur Aktualisierung der Liste von verfügbaren Mobilvorrichtungsanwendungen selektiv zu ändern.

12. Das Verfahren gemäß Anspruch 11, das weiter aufweist, an der zumindest einen mobilen drahtlosen Kommunikationsvorrichtung, Abfragen des Anwendungskatalogservers hinsichtlich der Liste von verfügbaren Mobilvorrichtungsanwendungen.

13. Das Verfahren gemäß Anspruch 12, wobei das Abfragen aufweist ein Abfragen des Anwendungskatalogservers basierend auf der gewählten Aktualisierungshäufigkeit.

14. Das Verfahren gemäß Anspruch 11, wobei die Liste der verfügbaren Mobilvorrichtungsanwendungen eine RSS(Really Simple Syndication)-formatierte Liste aufweist, die eine Vielzahl von Anwendungs-Deskriptoren aufweist.

15. Das Verfahren gemäß Anspruch 14, wobei die Anwendungs-Deskriptoren zumindest eines aus einem Namen, einer Version, einem Anbieter, einer Beschreibung und einer Größe einer Anwendung aufweisen.

## Revendications

1. Système de communication mobile sans fil, comprenant :
au moins un dispositif de communication mobile sans fil, configuré pour communiquer par sans fil avec un réseau de transport ;
au moins un serveur de stockage d'applications, configuré pour stocker une pluralité d'applications pour dispositifs mobiles destinées à être utilisées par ledit au moins un dispositif de communication mobile sans fil ; et
un serveur de catalogue d'applications, configuré pour :
mettre à jour une liste des applications disponibles pour dispositifs mobiles, à présenter sur ledit au moins un dispositif de communication mobile sans fil ; et
fournir une interface permettant au réseau de transport de modifier sélectivement une fréquence de mise à jour pour la mise à jour de la liste des applications disponibles pour dispositifs mobiles.

2. Système de communication mobile sans fil selon la revendication 1, dans lequel ledit au moins un dispositif de communication mobile sans fil interroge ledit serveur de catalogue d'applications pour obtenir la liste des applications disponibles pour dispositifs mobiles.

3. Système de communication mobile sans fil selon la revendication 2, dans lequel ledit au moins un dispositif de communication mobile sans fil interroge ledit serveur de catalogue d'applications avec la fréquence de mise à jour sélectionnée.

4. Système de communication mobile sans fil selon la revendication 1, dans lequel la liste des applications disponibles pour dispositifs mobiles comprend une liste formatée selon le format RSS (« *Real Simple Syndication* »*,* Syndication réellement simple), comprenant une pluralité de descripteurs d'applications.

5. Système de communication mobile sans fil selon la revendication 4, dans lequel les descripteurs d'applications comprennent au moins l'un des éléments suivants : nom de l'application, version, fournisseur, description et taille.

6. Serveur de catalogue d'applications destiné à être utilisé avec au moins un dispositif de communication mobile sans fil, configuré pour communiquer par sans fil avec un réseau de transport, au moins un serveur de stockage d'applications étant configuré pour stocker une pluralité d'applications pour dispositifs mobiles destinées à être utilisées par ledit au moins un dispositif de communication mobile sans fil, le serveur de catalogue d'applications comprenant :
un module de traitement configuré pour mettre à jour une liste des applications disponibles pour dispositifs mobiles, à présenter sur ledit au moins un dispositif de communication mobile sans fil ; et
un module d'interface configuré pour fournir une interface permettant au réseau de transport de modifier sélectivement une fréquence de mise à jour pour la mise à jour de la liste des applications disponibles pour dispositifs mobiles.

7. Serveur de catalogue d'applications selon la revendication 6, dans lequel ledit module de traitement fournit la liste des applications disponibles pour dispositifs mobiles après interrogation par ledit au moins un dispositif de communication mobile sans fil.

8. Serveur de catalogue d'applications selon la revendication 7, dans lequel ledit au moins un dispositif de communication mobile sans fil interroge ledit serveur de catalogue d'applications avec la fréquence de mise à jour sélectionnée.

9. Serveur de catalogue d'applications selon la revendication 6, dans lequel la liste des applications disponibles pour dispositifs mobiles comprend une liste formatée selon le format RSS (« *Real Simple Syndication* », Syndication réellement simple), comprenant une pluralité de descripteurs d'applications.

10. Serveur de catalogue d'applications selon la revendication 9, dans lequel les descripteurs d'applications comprennent au moins l'un des éléments suivants : nom de l'application, version, fournisseur, description et taille.

11. Procédé de communication mobile sans fil, comprenant les étapes consistant à :
fournir au moins un dispositif de communication mobile sans fil, configuré pour communiquer par sans fil avec un réseau de transport ;
stocker une pluralité d'applications pour dispositifs mobiles destinées à être utilisées par ledit au moins un dispositif de communication mobile sans fil ; et
sur un serveur de catalogue d'applications, les étapes consistant à :
mettre à jour une liste des applications disponibles pour dispositifs mobiles, à présenter sur ledit au moins un dispositif de communication mobile sans fil ; et
fournir une interface permettant au réseau de transport de modifier sélectivement une fréquence de mise à jour pour la mise à jour de la liste des applications disponibles pour dispositifs mobiles.

12. Procédé selon la revendication 11, comprenant en outre, sur ledit dispositif de communication mobile sans fil, l'étape consistant à interroger le serveur de catalogue d'applications pour obtenir la liste des applications disponibles pour dispositifs mobiles.

13. Procédé selon la revendication 12, dans lequel l'étape d'interrogation comprend l'étape consistant à interroger le serveur de catalogue d'applications avec la fréquence de mise à jour sélectionnée.

14. Procédé selon la revendication 11, dans lequel la liste des applications disponibles pour dispositifs mobiles comprend une liste formatée selon le format RSS (« Real *Simple Syndication* », Syndication réellement simple), comprenant une pluralité de descripteurs d'applications.

15. Procédé selon la revendication 14, dans lequel les descripteurs d'applications comprennent au moins l'un des éléments suivants : nom de l'application, version, fournisseur, description et taille.
